# EUROPÄISCHE PATENTSCHRIFT

(11) **EP 2 121 229 B1**
(45) Veröffentlichungstag und Bekanntmachung des Hinweises auf die Patenterteilung: **09.06.2010**
(21) Anmeldenummer: 07816229.4
(22) Anmeldetag: 02.11.2007
(51) Int. Cl.: B23D 61/12, B23D 65/00

(54) **SÄGEBAND UND VERFAHREN ZUR HERSTELLUNG EINES SÄGEBANDES**
SAW BAND AND METHOD FOR PRODUCING A SAW BAND
RUBAN DE SCIE ET PROCÉDÉ DE FABRICATION D'UN RUBAN DE SCIE

(30) Priorität: 24.11.2006 CH 18962006
(43) Veröffentlichungstag der Anmeldung: 25.11.2009
(73) Patentinhaber: Oerlikon Trading AG, Trübbach, 9477 Trübbach (CH)
(72) Erfinder: VOGEL, Josef, 6048 Horw (CH); BALINT, Michael, 89561 Dischingen (DE); PEYERL, Gerhard, 65366 Geisenheim (DE)
(74) Vertreter: Wegmann, Urs
(86) Internationale Anmeldenummer: PCT/CH2007/000546
(87) Internationale Veröffentlichungsnummer: WO 2008/061381

(56) Entgegenhaltungen:
- DE-A1-102005 016 953
- US-A1- 4 031 793

## Beschreibung

Die Erfindung betrifft ein Sägeband aus Stahl für eine umlaufende Bandsägemaschine gemäss dem Oberbegriff von Anspruch 1. Des Weiteren betrifft die Erfindung ein Verfahren zur Herstellung eines Sägebandes gemäss dem Oberbegriff von Anspruch 16.

Die Publikation WO 2005/014877 A1 offenbart die Beschichtung eines Stahlbands in einem Rolle-zu-Rolle Prozess, wobei auf dem bevorzugt aus Kaltarbeitsstahl hergestelltem Band eine Schicht aus unterschiedlichen Hartstoffen einseitig oder in aufeinanderfolgenden Prozessschritten beidseitig aufgetragen wird. Anschliessend kann aus diesem Band ein Sägeband hergestellt werden.

Nachteilig ist dabei, dass die Beschichtung von der Seite erfolgt. Damit wird auf den dem Verschleiss am stärksten ausgesetzten Funktionsflächen (Freifläche & Spanfläche) die geringste, auf den wenig belasteten Seitenflächen die grösste Schichtdicke aufgebracht und somit das kostspielige Beschichtungsmaterial schlecht genutzt. Häufig wird zudem die Beschichtung auf Kaltarbeitssstählen aufgebracht, die erst anschliessend gehärtet werden, was sich nachteilig auf den Schicht-/Substratverbund auswirken kann. Andererseits können solche Kaltarbeitsstähle nicht ohne weiteres nach dem Härten beschichtet werden, da übliche PVD-Prozesse die Anlasstemperatur solcher Werkstoffe bei weitem überschreiten. Tieftemperatur-PVD-Prozesse haben wiederum den Nachteil, schlechter haftende Schichten zu erzeugen, was gerade bei einer hohen Belastung wie beim Sägen und abrasivem Verschleiss ein wesentlicher Nachteil ist. Da die im Stand der Technik bekannten Schichtdicken wesentlich grösser als 5 µm sind, sind diese teuer in der Fertigung und bringen keine wesentliche Verbesserung gegenüber unbeschichteten Sägen, da hier tendenziell die Schicht an der Sägespitze beim Einlaufen abbricht und somit die Vorteile der Beschichtung dort nicht mehr zum Tragen kommen.

Aus der WO 2006/089753 ist ein Stahlsägeband für eine Bandsägemaschine bekannt, das mit einer Hartstoffbeschichtung versehen ist deren Dicke auf den Freiflächen der Zahnreihe grösser ist als auf den Seitenflächen. Mit solchen beschichteten Bändern konnte in Langzeitsägeversuchen teilweise ausgezeichnete Ergebnisse erzielt werden. Allerdings stellte sich heraus, dass diese Ergebnisse häufig nicht reproduzierbar waren und es teilweise bereits beim Einsägevorgang zu Schichtabplatzungen kommt und deshalb ein sorgfältiger Einsägevorgang notwendig ist.

Wie schon erwähnt ist bei Sägebändern des Standes der Technik, die üblicherweise durch Fräsen oder Schleifen hergestellt werden, ein Einsägevorgang notwendig, bei dem das Band mit geringerem Druck und/oder geringerem Vorschub betrieben wird. Dies ist einerseits umständlich und setzt andererseits die Produktivität herab. Wird auf den Einsägevorgang verzichtet kommt es zumindest bei unbeschichteten Sägebändern zu einem starken Anstieg des Verschleisses an den Zähnen und einem Anstieg der Schnittdauer, wobei das Band meist innerhalb weniger Schnitte unbrauchbar ist. Auch bei beschichteten Bändern ist ein Anstieg der Schnittzeit festzustellen, der in Abhängigkeit vom Spanwinkel α unterschiedlich gross ist. Weiters kann es zu einem vorzeitigen Verschleiss kommen, der sich u.a. durch ein Verlaufen, d.h. Abweichen von der vorgegebenen Schnittebene, negativ auswirken kann.

Die Aufgabe der vorliegenden Erfindung besteht darin, die Nachteile des Standes der Technik zu beseitigen bzw. zu verringern. Insbesondere ist es Aufgabe der vorliegenden Erfindung, ein Sägeband für eine Bandsägemaschine sowie ein Verfahren zur Herstellung eines derartigen Sägebandes zu schaffen, welche bei der Bearbeitung von insbesondere metallischen Werkstoffen eine sicher reproduzierbare grössere Leistungsfähigkeit ermöglichen. Ferner sollen die Wirtschaftlichkeit bei der Herstellung wie auch beim Einsatz eines solchen Sägebandes verbessert werden. Letzteres soll insbesondere dadurch erreicht werden, dass durch Einsetzen eines erfindungsgemässen Sägebandes der sonst notwendige Einsägevorgang kürzer ist oder gar vollständig entfallen kann.

Die Aufgabe wird bei dem gattungsgemässen Sägeband gemäss den Merkmalen des Patentanspruches 1 gelöst, sowie gemäss dem Herstellungsverfahren gemäss Anspruch 16. Die abhängigen Patentansprüche beziehen sich auf vorteilhafte weitere Ausgestaltungen der Erfindung.
Insbesondere bezieht sich die Erfindung auf ein beschichtetes Sägeband, mit dem es möglich ist, ohne den sonst bei neuen Bändern notwendigen zeitaufwendigen Zwischenschritt des Bandeinsägens, sofort unter üblichen Schnittbedingungen zu sägen. Dies wird durch eine besondere Zahnform einerseits und eine anschliessende geeignete Beschichtung andererseits erreicht. Mit einem speziellen abrasiven Bürstverfahren wird dem Zahn die notwendige Form gegeben.

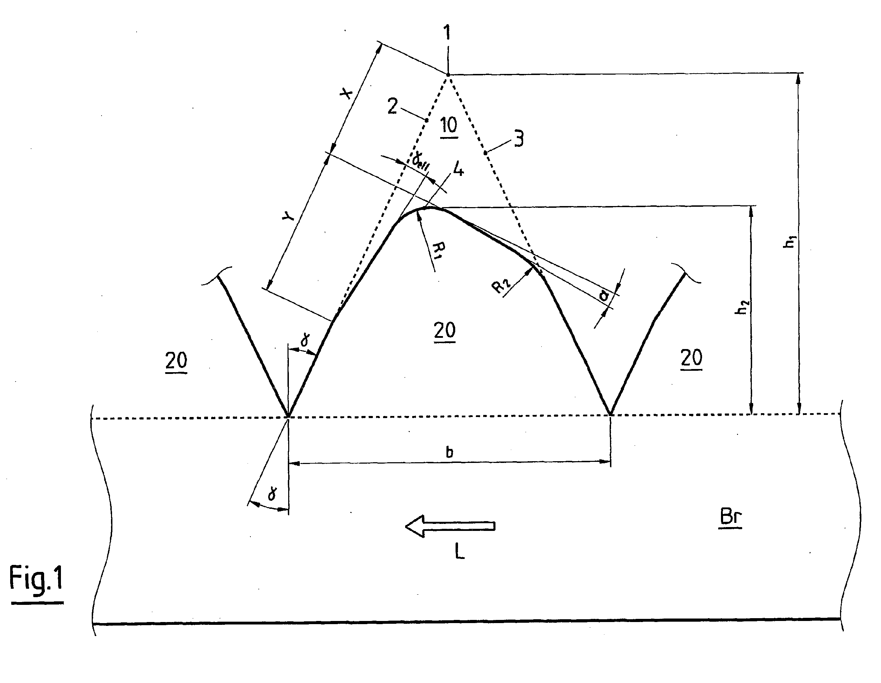

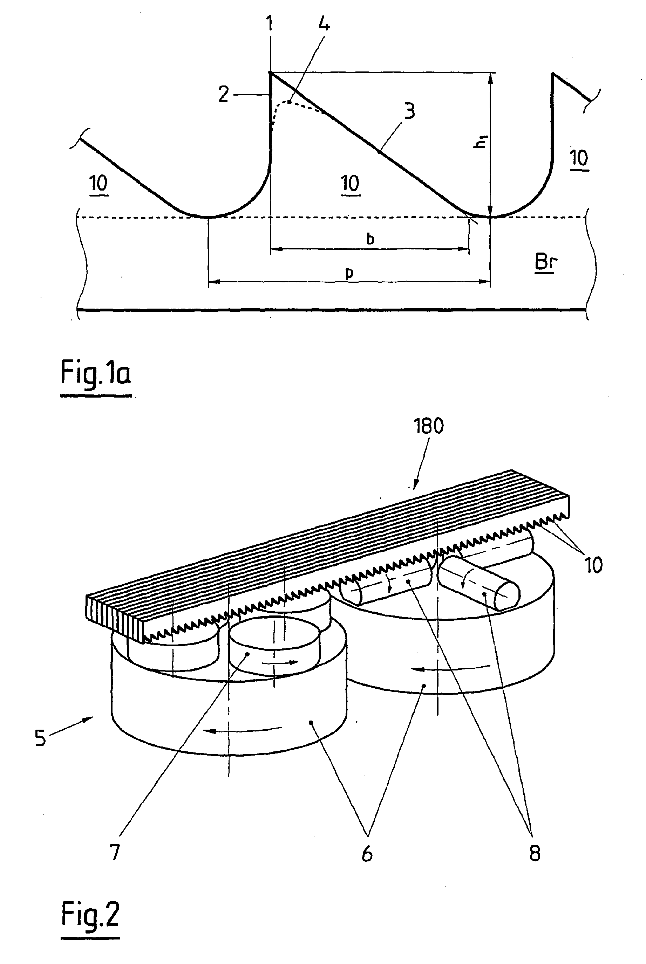

Überraschenderweise kann ein Sägeband, das eine entsprechend der in Fig.1 näher beschriebenen Zahngeometrie aufweist, sofort unter üblichen Einsatzbedingungen betrieben werden. Dabei zeigt sich auch gegenüber wie in WO 2006/089753 beschriebenen, beschichteten Bändern ein deutlicher Produktivitätsfortschritt. Die Beschichtung kann mit Vorteil entsprechend der vorerwähnten Anmeldung erfolgen und dessen Inhalt wird hiermit als integrierter Bestandteil der vorliegenden Anmeldung betrachtet.
Schichten, die sich besonders gut für die Sägebeschichtung eignen sind TiAINsowie AICrN-Schichten, wie sie beispielsweise auf industriellen Beschichtungssystemen des Typs BAI1200 oder RCS hergestellt werden können. Weitere Schichten, die auch zumindest in speziellen Schicht / Bearbeitungswerkstoffkombinationen eine deutliche Steigerung der Schnittleistung ergaben, waren Kombinationen von TiAlN-, AlCrN-, CrN-, sowie die Carbonitiride und Carbide der entsprechenden Schichten, beispielsweise auch als Multilagen- oder Gradientenschichten mit steigendem Kohlenstoffgehalt, kombiniert mit metallischen, bzw. metallfreien DLC (Diamond Like Carbon) - Deckschichten, sowie verschiedene Si-haltige Schichten bspw. TiAlSiN, AlCrSiN & die entsprechenden Carbonitride mit einem Si-Gehalt zwischen 1 bis 12 at% im Verhältnis zum Gesamtmetallgehalt.

Weitere besonders geeignete Schichtsysteme umfassen auch andere Hartstoffe, wie ein oder mehrere Metalle der IV-, V- oder VI-ten Nebenelementegruppe des Periodensystems (Übergangsmetalle) bzw. Aluminium oder Silizium und deren Verbindungen. Insbesondere kommen hierfür die Nitride, wie das bekannte TiN, VN oder TiSiN bzw. SiN, Carbide oder Carbonitride wie beispielsweise TiCN, VCN, Boride, Oxide wie bspw. Al₂O₃, (AlCr)₂O₃ sowie andere Mischungen der entsprechenden Nichtmetalle, wie beispielsweise Bornitride, Carbooxinitride u.a. mit den genannten Metallen in Frage. Auch Mehrlagenschichtsysteme, sowie speziell ausgebildete Haft- und Übergangsschichten können dabei für die Bearbeitung bestimmter Werkstoffe von Vorteil sein.

Als besonders vorteilhaft bezüglich der Standzeit sowie der Schnittgeschwindigkeiten und der Vorschübe hat sich eine Beschichtung aus einem Werkstoff auf Nitridbasis erwiesen. Hierbei kann die Beschichtung in vorteilhaften Ausgestaltungen TiN, TiCN, TiAlN und/oder AlCrN aufweisen. Hierbei können sämtliche Werkstoffe auch als Legierungen oder Gemische eingesetzt werden.

Eine weitere für die praktische Anwendung sehr gut geeignete Beschichtung kann WC/C als Deckschicht aufweisen, da dieses metallhaltige DLC-Schichtsystem ein besonders gutes Einlaufverhalten, beispielsweise eine Schichtglättung während der ersten Schnittzyklen, aufweist. Als Stützschicht kommen besonders die wie oben erwähnten Systeme in Frage.

Wenn in einer vorteilhaften Weiterbildung der Erfindung die Beschichtung eine Dicke von 2 - 3 µm aufweist, führt dies vorteilhafterweise zu einem sehr ruhigen, gleichmässigen Lauf des Sägebandes und nicht zu einem Verklemmen oder ähnlichen Problemen, die sich bei einer Beschichtung mit einer grösseren Dicke beim Sägen von Werkstücken ergeben könnten. Die Schichtdicke hängt jedoch auch von der Zahnteilung, der Zahngeometrie, dem zu bearbeitenden Material und dem Material der Beschichtung selbst ab, wodurch fallweise auch grössere Schichtdicken möglich sind.

Zur Optimierung der Schnittleistung einer erfinderisch beschichteten Säge muss daher die richtige Schichtdicke eingestellt werden. Dabei hat sich in Versuchen überraschenderweise herausgestellt, dass dünnere Schichten, etwa zwischen 0.5 bis 3 µm, insbesondere zwischen 0.7 und 2 µm, wesentlich bessere Schnittergebnisse liefern als dicke Schichten, ab einer Schichtstärke von ca. 4 µm und grösser. Letztere konnten gegenüber unbeschichteten Bändern nur eine geringe oder gar keine Verbesserung des Schnittverhaltens erreichen.

In einer weiteren Ausgestaltung der Erfindung kann vorgesehen sein, dass die Zahnreihe aus HSSE besteht. Dieser Grundwerkstoff für die Zahnreihe führt zusammen mit der erfindungsgemässen Beschichtung zu einem besonders verschleissfesten Sägeband. Dabei kann der Bandrücken aus einem relativ einfachen, "weichen" Stahl gefertigt sein, wohingegen die Zahnreihe aus einem Hochleistungs - Schnellarbeitsstahl, vorzugsweise aus HSSE, besteht. Die Zahnreihe wird dabei mit dem Bandrücken bevorzugt durch ein Schweissverfahren verbunden. Die kürzesten Schnittzeiten und die langfristig am besten reproduzierbaren Ergebnisse wurden mit beschichteten Bändern mit einem Spanwinkel von 0° erzielt.

Auf Grund der oben beschriebenen Ausgangslage, wurden verschiedene Behandlungsschritte nach dem Urformen (üblicherweise ein Fräs- oder Schleifprozess) bzw. vor dem Beschichten des Sägeblatts getestet. Bei unterschiedlichen Verfahren, wie dem Strahlen mit kantigem und rundem Strahlgut, verschiedene Abzieh- und einfachen Bürstverfahren konnten Sägeblätter zwar entgratet werden, jedoch konnten derart behandelte Teile bei Tests keine eindeutige Verbesserung in der Lebensdauer bzw. der Reproduzierbarkeit der Bandqualität erzielt werden. Mit solchen Verfahren war es auch nicht möglich die Zahnform in geometrisch definierter Weise zu formen.
Überraschenderweise ist es jedoch gelungen mit einem speziellen abrasiven Bürstverfahren, gemäss der vorliegenden Erfindung, sowohl die Produktivität als auch die Reproduzierbarkeit von Sägeblättern, insbesondere aber von anschliessend beschichteten Sägeblättern wesentlich zu steigern. Ein Sägeband, das eine entsprechend der in Fig.1 näher beschriebenen Zahngeometrie aufweist, welche mit dem abrasiven Bürstverfahren geformt wurde, kann sofort unter üblichen Einsatzbedingungen betrieben werden bei gesteigerter Lebensdauer. Dieses formgebende Bürstverfahren erlaubt ausserdem eine besonders wirtschaftliche Produktion von Sägebändern.

Die Erfindung wird nun anhand von Figuren schematisch und beispielsweise beschrieben. Es zeigen:
- Fig. 1: schematisch und von der Seite betrachtet die Zahngeometrie eines einzelnen Zahnes innerhalb einer Zahnreihe eines Sägebandes nach der Bearbeitung in vergrösserter Darstellung;
- Fig. 1a: schematisch und von der Seite betrachtet ein weiteres Beispiel einer Zahngeometrie eines einzelnen Zahnes innerhalb einer Zahnreihe eines Sägebandes mit abgerundeter Basis gegen den Bandrücken;
- Fig. 2: schematisch, in dreidimensionaler Darstellung, eine Bürstvorrichtung zur abrasiven Bearbeitung der Zahnreihen eines Sägebandpaketes zur Formgebung der Zähne;
- Fig. 3: ein Diagramm mit der Darstellung der Lebensdauer abhängig von der Anzahl schnitte bei verschiedenen Zahnausführungen und Beschichtungen;
- Fig. 4: schematisch, ein Produktionssystem zur Herstellung von Sägebändern gemäss der Erfindung.

Fig.1 zeigt ein bevorzugtes Beispiel für einen erfindungsgemässen Zahn, wie er durch einen oben beschriebenen abrasiven Bürstprozess herstellbar ist. Da die tatsächlichen Abmessungen am bearbeiteten Zahnkopf relativ klein sind, wurde in Figur 1 zur übersichtlichen Darstellung die Geometrie des Zahnes im Kopfbereich überproportional und vergrössert dargestellt. Die Urform des Zahnes, also vor der Bearbeitung, ist im wesentlichen Dreieckförmig mit der Basis b und der höhe h1 und ist als Zahnreihe am Bandrücken Br angebracht und auf bisher bekannte Weise aus einem Stahlband hergestellt. Die Seitenlinien des Dreiecks schneiden sich in der Dreiecksspitze bzw. in der Zahnspitze 1. Die in Laufrichtung L des Sägebandes vorne liegende Dreieckslinie bildet die Spanfläche 2 des Urzahnes 10 mit dem Spanwinkel γ gegenüber der Senkrechten zur Bandlaufrichtung und die hintere Linie bildet die Freifläche 3 des Urzahnes 10. Mit Hilfe des abrasiven und formgebenden Verfahrens ist es möglich die Geometrie des Ursprungszahns 10 definiert zu modifizieren und einen modifizierten Zahn 20 mit dem Zahnkopf 4 zu erzeugen. Hierbei wird die Zahnhöhe h1 verringert ein abgerundeter Zahnkopf 4 mit der Zahnhöhe h2 gebildet mit einem Schneidkantenradius R₁ und einem hinterem Radius R₂, und ein zusätzlicher effektiver Spanwinkel γ_{eff} sowie ein Freiwinkel α gebildet. Um eine nachhaltige Verbesserung der Eigenschaften des Sägebandes zu erreichen sollte die Anpassung der ursprünglichen Geometrie des dreieckförmigen Zahnes 10 auf Werte innerhalb der folgenden Bereiche eingestellt werden zur Erzeugung der modifizierten Zahnform 20:

| | |
|---|---|
| Ursprungszahnhöhe h1: | 1.00 bis 10.00 mm |
| Zahnbreite bei Basis b: | 1.00 bis 10.0 mm |
| Abtragshöhe X: | 0.02 bis 0.3 mm, bevorzugt 0.02 bis 0.10 mm |
| Anschräglänge Y: | 0.00 bis 0.3 mm, bevorzugt 0.00 bis 0.15 mm |
| Spanwinkel γ: | 0 - 7°, bevorzugt 0 - 3° |
| Effektiver Spanwinkel γ_{eff}: | 0 - 20°, bevorzugt 4-10° |
| Freiwinkel α: | 0 - 20°, bevorzugt 4-10° |
| Schneidkantenradius R₁: | 0.02 - 0.30 mm, bevorzugt 0.03 - 0.15 mm |
| Radius hinten R₂: | 0.02 - 0.30 mm, bevorzugt 0.03 - 0.15 mm |

Die Abtragungshöhe X wird hierbei von der Zahnspitze 1 des ursprünglichen Dreiecks bis zum Zahnkopf 4 des modifizierten Dreiecks gemessen, entlang der Spanfläche 2 des Dreiecks. Ein weiteres Neigen der Ursprünglichen Spanfläche 2 durch weiteres Abnehmen dieser Fläche in mindestens einem Teilabschnitt bestimmt den effektiven Spanwinkel γeff am modifizierten Zahn 20. Dieser Teilabschnitt wird als Anschräglänge Y bezeichnet und entlang der ursprünglichen Linie in Richtung des Bandrückens Br der Spanfläche 2 gemessen, vom Fusspunkt der Senkrechten auf diese Linie, die den Zahnkopf 4 des modifizierten Zahnes 20 berührt. Diese Anschräglänge reicht maximal bis zur Basis des Zahnes 10, 20. Die Zahnbreite b bleibt für den ursprünglichen Zahn 10 und den modifizierten Zahn 20 dieselbe. Die Zahnspitze 1 des ursprünglichen Zahndreieckes liegt innerhalb der Zahnbreite b der Zähne 10, 20 senkrecht betrachtet von der Basis des Dreiecks und überragt somit diese Basis in Bandrichtung nicht. Die Freifläche 3 erscheint nach der Modifikation und Abrundung der ursprünglichen Zahnspitze 1 am abgerundeten Zahnkopf 4 unter dem Freiwinkel α welcher gegen die Senkrechte zur Spanfläche 2 gemessen wird, die am Zahnkopf 4 anliegt.

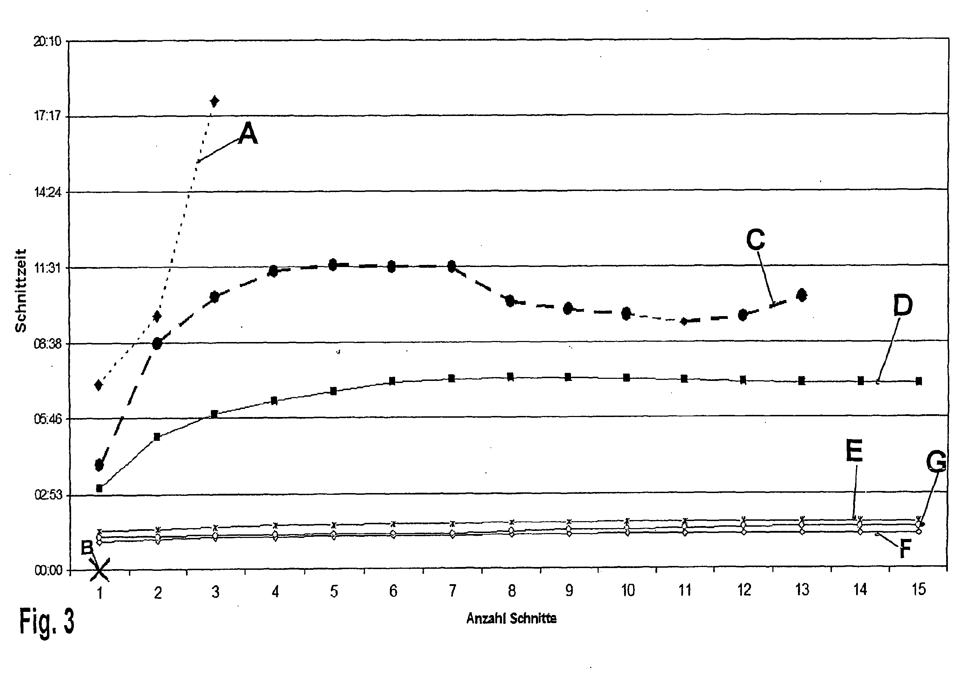

Besonders wichtig ist es dabei das Verfahren so zu betreiben dass der Radius R1 der Schneidkante wie beschrieben eingestellt wird. Aus Figur 3 ist die Abhängigkeit der Schnittzeit vom Kantenradius R1, dem Spanwinkel γ der Schnittanzahl sowie der Beschichtung dargestellt. Beschichtet wurde dabei analog der in WO 2006/089753 beschriebenen Beispiele mit einer 1 bis 2 µm dicken TiAlN Schicht.
Die in Figur 2 dargestellten Kurven zeigen die Resultate für Sägebänder mit folgenden Ausführungen:
- A: Unbeschichtet, Spanwinkel 10°
- B: Unbeschichtet, Spanwinkel 0°
- C: Beschichtet, Spanwinkel 10°
- D: Beschichtet, Spanwinkel 0°
- E: Beschichtet, Spanwinkel 0°, R₁ 0.06 mm
- F: Beschichtet, Spanwinkel 0°, R₁ 0.04 mm
- G: Beschichtet, Spanwinkel 0°, R₁ 0.03 mm

Unbeschichtete Bänder wie in Kurven A bzw. Messwert B dargestellt, können offensichtlich unter den eingestellten Schnittbedingungen nicht gefahren werden.
Beschichtete Bänder ohne vorhergehendes Anpassen der Zahngeometrie, beispielsweise durch das beschriebene Bürstverfahren, zeigen zwar ein besseres Schnittverhalten entsprechend den Kurven C und D. Allerdings ist dabei ein deutliches Einlaufverhalten mit ansteigenden Schnittzeiten zu erkennen. Bänder mit einem Spanwinkel von 10° zeigen dabei im Gegensatz zu unbeschichteten Bändern ein schlechteres Schnittverhalten und führen bereits ab dem 13. Schnitt zu keinem brauchbaren Ergebnis.
Völlig unterschiedlich dazu sind die Ergebnisse mit definiert eingestellten Schneidkantenradien, entsprechend der vorliegenden Erfindung, wie sie in den Beispielen E bis F zwischen 0.03 und 0.06 mm eingestellt wurden. Hier zeigt sich von Anfang an eine sehr gleichmässige Schnittleistung mit einem nur minimalen Anstieg der Schnittzeit. Gleichzeitig ist im Vergleich zu den vorbekannten beschichteten Werkzeugen eine Steigerung der Schnittgeschwindigkeit um den Faktor 4 bis 6, möglich bei gleich bleibender Schnittqualität.

Die Zahnform kann mit Vorteil im Basisbereich der Dreiecksform abgerundet ausgeführt werden, derart dass von einem Zahn zum nächsten ein abgerundeter Übergang entsteht, wie dies schematisch und von der Seite betrachtet in der Figur 1a dargestellt ist. Zur Verdeutlichung wurde auch hier die abgetragene Zahnspitze 1, also der dadurch entstandene Zahnkopf 4 überproportional vergrössert mit gestrichelter Linie dargestellt. Das Zahndreieck 10 besitzt auch hier die Basis b und die beiden Schenkel werden auch hier von der Spanfläche 2 und der Freifläche 3 eingeschlossen dessen Linien sich in der Zahnspitze 1 schneiden und bis auf die Basis b verlängert sind. Der ursprüngliche Zahn 10 ist in diesem Fall nur im oberen Bereich Teil des Dreieckes selbst und weicht im unteren Bereich durch die Rundungen davon ab. Das Dreieck dient der Definition und der Vermassung. Die Zahnabstände p von einem Zahn zum nächsten in der Zahnreihe auf dem Band fallen in diesem Fall nicht mit der Zahnbreite der Dreiecksbasis zusammen wie dies bei der Ausführung nach der Figur 1 dargestellt ist. Bei diesem bevorzugten Beispiel ist die Zahnbreite b der Dreiecksbasis kleiner als der Zahnabstand p, beispielsweise zwischen 1.0 und 10.0 mm. Der Zahnabstand p liegt im Bereich von 1.0 mm bis 10 mm. Die Ursprungszahnhöhe h₁ liegt ebenfalls im Bereich von 1.0 bis 10.0 mm. Weiter bevorzugt ist die Verwendung von Ursprungszähnen mit einer Spanfläche 2, die senkrecht zur Bandrichtung ausgebildet ist, wie dies in der Figur 1a dargestellt ist. Die Bearbeitung der Zahnspitze 1 erfolgt auch bei diesem Beispiel analog den Werten und dem Verfahren wie bei dem beschriebenen Beispiel nach Figur 1.

In Figur 2 ist eine bevorzugte Bürstvorrichtung 5 dargestellt mit der das erfindungsgemässe Verfahren auf ein Paket 180 von ca. 10 bis 100 Sägebändern angewandt wird. Die Vorrichtung 5 besteht aus zumindest einem horizontal rotierendem Grundkörper 6, auf dem Tellerförmige Bürstwerkzeuge 7 und/oder Zirkulare Bearbeitungswerkzeuge 8, wie beispielsweise walzenförmige Bürstwerkzeuge angeordnet sind, welche vorzugsweise planetenartig bewegt werden und über die Ursprungszähne 10 der Sägebänder derart geführt werden, dass die Zahnspitzen in die gewünschte Form gebracht werden durch abrasives Bürsten. Dieses abrasive Bürsten wirkt ähnlich einem Schleifverfahren ist aber wesentlich effektiver und einfacher zu handhaben, insbesondere in der Zusammenwirkung mit der vorliegenden Anwendung zur Formgebung von Zähnen bei Sägebändern.
Die Bürstvorrichtung kann auch mit lateral bewegten Bürsten oder einzelnen rotierenden Bürsten, wie tellerförmigen oder walzenförmigen Bürsten die um eine Achsen rotieren, ausgebildet sein. Grundsätzlich könnten sogar die Sägebänder selbst bewegt werden oder beides. Die Vorrichtung muss nicht zwingend mit planetenartig um zumindest zwei Achsen rotierenden Bürsten aufgebaut sein.

Eine Planetenanordnung wird aber stark bevorzugt weil damit die zu lösende Aufgabe besonders gut und wirtschaftlich realisiert werden kann. Mit der Planetenbewegung rotieren die Werkzeuge um die eigenes Achse und die Werkzeuge rotieren gemeinsam um den rotierende Träger mit der Befestigungsachse. Die Bearbeitungswerkzeuge werden durch die planetenförmige Bewegung mit definierten Zeitspanvolumen und Parametereinstellungen über die Zahnspitzen 1 geführt derart, dass an den Zahnspitzen definierte geometrische Formen entstehen und gleichzeitig im Reibbereich der Zähne 20 ein optimierter Oberflächenfinish erzielt wird.
Die einzustellende Form des Zahnkopfes 4 durch Abnehmen eines Urzahnes 10 von dessen Zahnspitze 1 weg wird durch verschiedene Parameter bestimmt. Beispielsweise durch die Ursprungszahnform 10, also beispielsweise einer bevorzugten Dreiecksform, die Ausbildung der Bürstenform, die Materialien und Dimensionen der Bürstenfasern, die Art der Bürstenbewegung und durch die Anstellwinkel der Bürsten gegenüber der zu bearbeitenden Zähne 10 der Zahnreihen der Sägebänder. Durch unterschiedliche Werkzeugarten und Werkzeugkonfigurationen in Verbindung mit differenzierten Parametern können somit Formen, Geometrien und Finish an den Zahnspitzen 1, 4 nach Bedarf und Vorgabe verändert und hergestellt werden.

Sägebänder der vorliegenden Art weisen eine Banddicke von 0.90 mm bis 1.60mm auf und eine Bandlänge von 40 bis 200 m. Die Breite der Bänder, also des Bandrückens Br mit der Zahnhöhe h2 liegt im Bereich von 27 bis 80 mm.
Die Ursprungszahnhöhe h1 des Zahndreieckes 10 liegt im Bereich von 1.00 bis 10.00 mm und die Zahnbreite b an der Basis des Dreiecks im Bereich von 1.0 bis 10.0 mm.

Nachfolgend werden wichtige Dimensionierungswerte für ein bevorzugtes Beispiel der Bürsten 7 und der Bürstanordnung 5 angegeben für Sägebänder mit Zähnen 10, 20 aus HSS - Material. Die Bürstanordnung besteht aus einer Planetenanordnung mit einem rotierenden Träger 6 als Grundkörper bzw. Planetenkopf und den darauf angeordneten Tellerförmigen um ihre Achse rotierenden Bürstwerkzeugen 7 und/oder auf dem Träger 6 angeordneten rotierenden walzenförmigen Bürstwerkzeugen 8. Der rotierende Träger rotiert hier mit einer Drehzahl von 40 bis 60 U/min. Das Bürstwerkzeug 7, 8 rotiert mit einer Drehzahl von 600 bis 1200 U/min. Bei dem Verhältnis von 1200 zu 60, beispielsweise, rotiert das Bürstwerkzeug 7, 8 etwa 20 mal schneller als der Träger 6. Die Filamente der Bürsten bestehen im wesentlichen aus einem Kunststoff mit darin eingebettetem, z.B. einextrudierten, abrasiven Material, wie Schleifkörner. Der Kunststoff ist vorzugsweise einer der PEEK (Polyetheretherketon, z.B. Ultrapek von BASF oder Victrex von ICI), PMIA (Poly m-phenylene isophtalamide), oder Nylon und es können je nach Aufgabenstellung Kohlefasern (KF) eingebettet werden. Das abrasive Material wird mit einer bestimmten Körnung, beispielsweise mit Körnung 240, vorzugsweise mit verschiedenen Körnungen, in den Kunststoff eingebettet. Das, abrasive pulverförmige gekörnte Material enthält eines der Materialien Karborundum, Korund, SiC oder vorzugsweise Diamant oder Mischungen dieser Materialien. Der Durchmesser einer derartigen Bürstenfaser, welche in einer Vielzahl auf einem Träger zu einer Bürste zusammengefasst sind, beträgt 0.2 bis 0.7 mm bei eine Länge von 15 bis 25 mm. Diese Filamente sind einzeln oder in Büscheln im Zirkular- oder Tellerwerkzeug eingesetzt, wobei je nach Anforderung die Ausrichtung der Filamente oder Büschel zu deren Laufrichtung und abweichend von der Senkrechten Anordnung zum Werzeughalter unterschiedlich gewählt werden kann.

Der Durchmesser eines Tellerförmigen Bürstwerkzeuges 7 beträgt beispielsweise 210mm. Die Bürsten werden entsprechend den vorgegebenen zu erreichenden Endmassen des Zahnkopfes 4 entsprechend tief im Eingriff betrieben oder nachgeführt. Die Rotationsebene ist im wesentlichen parallel zur Bandrichtung angeordnet, kann aber auch nach Bedarf leicht abgekippt werden bei speziellen Formgebungswünschen. Die Anordnung ermöglicht das Bearbeiten von mehreren Sägebändern gleichzeitig. Mehrere Sägebänder können dann zu einem Paket 180 zusammengefasst werden, vorzugsweise mit einer Paketgrösse von 10 bis 100 Sägebändern. Diese werden im Paket derart zusammengelegt, dass die Ursprungszähne lateral fluchtend übereinander liegen. Die Bearbeitung der Sägebänder erfolgt mit Vorteil mit mindestens zwei Stufen bei immer feiner werdenden Filamentdurchmesser.

Für Sägebänder der vorliegenden Art wird dies vorzugsweise in drei Stufen durchgeführt. Die drei Stufen werden hierbei, beispielsweise, folgendermassen umgesetzt:

| | **1. Stufe** | **2. Stufe** | **3. Stufe** |
|---|---|---|---|
| Filamentdurchmesser | 0.6mm | 0.4mm | 0.25 |
| Besatzlänge | 15mm | 25mm | 25mm |
| Eintauchtiefe | 0.2mm | 0.4mm | 0.6mm |
| Drehzahlen Träger / Bürstwerkzeug | 60/1200 U/min | 40/600 U/min | 60/1200 U/min |
| Filamentmaterial mit Diamant | PMIA | PMIA/KF | PMIA/KF |

Ein oder mehrere Tellerbürsten- und/oder Walzbürstensätze werden somit entsprechend der Erfindung mit der überlagerten Planetenbewegungen über die darunter durchlaufenden Zahnspitzen geführt. Dazu wird der Filamentdurchmesser mit der Schnittgeschwindigkeit so gewählt, dass das erzeugte Widerstandsmoment in Verbindung mit der Filament- Eintauchtiefe zur Zahnspitze 1 ein definiertes Zeitspanvolumen und somit eine entsprechende Zerspanungsleistung pro Zeiteinheit ergibt. Die Zahnspitze kann somit, wie im vorherhenden Beispiel beschrieben und in der Figur 1 dargestellt ist, in die gewünschte definierte und vorteilhafte Form auf wirtschaftliche Weise gebracht werden. Das vorgestellte Verfahren kann nicht nur auf die Formgebung von Zähnen bei Sägebändern angewendet werden. Es werden auch bessere Ergebnisse, insbesondere bezüglich der Einlaufeigenschaften erzielt für andere Arten von Sägeblättern, wie insbesondere für Kreissägeblätter. Allerdings ist das Verfahren besonders geeignet für die vorerwähnten und deshalb bevorzugten Bandsägeblätter.

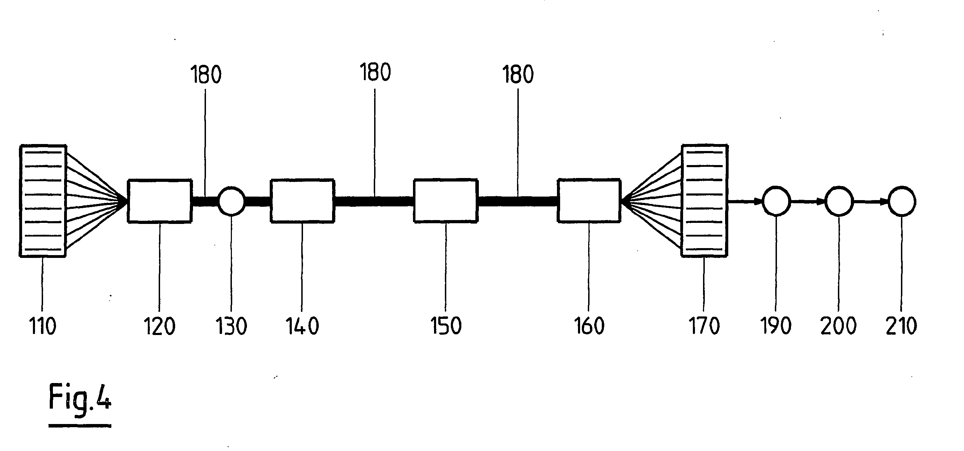

In Figur 4 wird schematisch eine industriellen Fertigungsanlage zur Herstellung von Sägebänder, wie Bimetall- oder HSSE Bänder, gemäss der Erfindung dargestellt. Eine Mehrzahl von Bändern sind auf einem Abwickelhaspel 110 in Bandform mit grossen Längen gelagert. Vom Abwickelhaspel 110 werden die Bänder abgewickelt und zu einem Paket 180 von mehreren Bändern zusammengefasst und in der Zahnbearbeitungseinrichtung 120 werden die Urzähne 1 in dem Bänderpaket 180 gleichzeitig vorgeformt, derart dass die Zähne der Bänder deckend übereinander liegend ausgerichtet sind. Danach werden die Zähne 1 des Bänderpaketes 180 in der Bürstvorrichtung 130, 5, wie zuvor beschrieben, entsprechend geformt. In der Richtvorrichtung 140 erfolgt das Richten der Sägebänder und danach in der Vorrichtung 150 das Schränken. Im Durchlaufofen 160 erfolgt eine Temperaturbehandlung und danach werden die Sägebänder auf dem Aufwickelhaspel 170 getrennt vom Paket 180 aufgewickelt. Eine weitere Temperaturbehandlung im Glühofen 190 erfolgt nach Bedarf bevor diese weiter behandelt werden in der Reinigungsstation 200. Anschliessend erfolgt die Beschichtung in einer Vakuumkammer 210 mit einer Hartstoffschicht, mindestens an den Schneidflächen der Zähne 20, wie dies zuvor ausführlich beschrieben worden ist.

## Patentansprüche

1. Sägeband aus Stahl für eine Bandsägemaschine mit einem Bandrücken (Br) und mit einer daran angeordneten Zahnreihe die mehrere Zähne (20) aufweist, wobei die Ursprungs Zahnform (10) dreieckförmig ist mit einer Zahnbasis mit der Zahnbreite (b) und mit der Zahnspitze (1) mit einer ersten Zahnhöhe (h1), derart dass die Zahnspitze (1) die Zahnbreite (b) in Bandlaufrichtung (L) nicht überragt, wobei der in der Laufrichtung (L) vorne liegende Schenkel des Dreiecks die Spanfläche (2) und der hintere Schenkel die Freifläche (3) des Zahnes (10, 20) bildet, **dadurch gekennzeichnet, dass** die Zahnspitze (1) des Dreiecks abgerundet abgetragen ist und als abgerundeter Zahnkopf (4) ausgebildet ist mit einer reduzierten zweiten Zahnhöhe (h2) welcher beabstandet ist von der Basis des Dreiecks mit der Zahnbreite (b), und dass mindestens im Bereich des Zahnkopfes (4) eine Hartstoffbeschichtung die Schneidfläche, gebildet aus dem Zahnkopf (4), der Spanfläche (2) und der Freifläche (3), mindestens teilweise bedeckt.

2. Sägeband nach Anspruch 1, **dadurch gekennzeichnet, dass** die Spanfläche (2) gegenüber der Senkrechten zur Basis und zum Bandrücken (Br) um einen Spanwinkel (γ) geneigt ist und dieser im Bereich von 0° bis 7° liegt, vorzugsweise im Bereich von 0° bis 3°.

3. Sägeband nach Anspruch 1 oder 2, **dadurch gekennzeichnet, dass** die Freifläche (4) gegenüber der Senkrechten zur Spanfläche (2) um einen Freiwinkel (α) geneigt ist und dieser im Bereich von 0° bis 20° liegt, vorzugsweise im Bereich von 4° bis 10°.

4. Sägeband nach einem der vorhergehenden Ansprüche, **dadurch gekennzeichnet, dass** die Abtragungshöhe (X) von der Zahnspitze (1) des ursprünglichen Dreiecks bis zum Zahnkopf (4), gemessen entlang der Spanfläche (2) des Dreiecks, im Bereich von 0,02 bis 0,30 mm liegt, vorzugsweise im Bereich von 0,02 bis 0,10 mm bei einer ursprünglichen Zahnhöhe (h1) der Spitze (1) des Dreiecks von 1.00 bis 10.00mm, und bei einer Zahnbreite (b) an der Basis des Dreiecks von 1.0 bis 10.0mm.

5. Sägeband nach einem der vorhergehenden Ansprüche, **dadurch gekennzeichnet, dass** mindestens ein Teil der Länge der ursprünglichen Spanfläche (2) des Dreieckes, mindestens in einem Teilabschnitt vom Zahnkopf (4) weg in Richtung gegen die Basis, weiter geneigt ist um einen zusätzlichen effektiven Spanwinkel (γeff) und dieser Winkel im Bereich von 0° bis 20° liegt. Vorzugsweise im Bereich von 4° bis 10°.

6. Sägeband nach Anspruch 5, **dadurch gekennzeichnet, dass** der geneigte Teilabschnitt, entlang des Spanfläche (2) gemessen, die Anschräglänge (Y) bildet und im Bereich von 0.00 bis 0.30 mm liegt, vorzugsweise im Bereich von 0.00 bis 0.15mm und höchstens bis zur Basis des Zahnes (20) reicht.

7. Sägeband nach einem der vorhergehenden Ansprüche, **dadurch gekennzeichnet, dass** der abgerundete Zahnkopf (4) im obersten Bereich mit der Zahnhöhe (h2) einen ersten Schneidkantenradius (R1) aufweist der im Bereich von 0.02 bis 0.30 mm liegt, vorzugsweise im Bereich von 0.03 bis 0.15 mm.

8. Sägeband nach einem der vorhergehenden Ansprüche, **dadurch gekennzeichnet, dass** im hinteren Bereich des Zahnkopfes (4) gegen die Freifläche (3) des Dreiecks eine Abrundung vorgesehen ist mit einem hinteren, zweiten Radius (R2) der im Bereich von 0.02 bis 0.30mm liegt, vorzugsweise im Bereich von 0.03 bis 0.15mm.

9. Sägeband nach einem der vorhergehenden Ansprüche, **dadurch gekennzeichnet, dass** die Beschichtung ein oder mehrere Metalle der IV-, V- oder VI-ten Nebenelementgruppe des Periodensystem oder Aluminium oder Silizium enthält.

10. Sägeband nach Anspruch 9, **dadurch gekennzeichnet, dass** die Beschichtung die Nitride, Oxide, Carbide, Carbonitride, Boride der vorgenannten Metalle oder Mischungen davon enthält.

11. Sägeband nach Anspruch 10, **dadurch gekennzeichnet, dass** die Beschichtung TiAlN, AlCrN, metallisches oder metallfreies DLC, TiAlSiN, TiAlCN, WC/C enthält.

12. Sägeband nach Anspruch 9 bis 11, **dadurch gekennzeichnet, dass** die Beschichtung als Mehrlagensystem ausgeführt ist.

13. Sägeband nach Anspruch 12, **dadurch gekennzeichnet, dass** das Mehrlagensystem Haft- und Übergangsschichten aufweist.

14. Sägeband nach einem der vorhergehenden Ansprüche, **dadurch gekennzeichnet, dass** die Beschichtung eine Dicke von weniger als 4 µm, bevorzugt von 0.5 bis 3 µm, besonders bevorzugt von 0.7 bis 2 µm aufweist.

15. Sägeband nach einem der vorhergehenden Ansprüche, **dadurch gekennzeichnet, dass** der Bandrücken (Br) und die Zahnreihe mit den abgerundeten Zähnen (20) aus unterschiedlichen Stahlsorten bestehen und die Zahnreihe aus einem Hochleistungs-Schnellarbeitsstahl, vorzugsweise aus HSSE, besteht.

16. Verfahren zur Herstellung eines Sägebandes aus Stahl für eine Bandsägemaschine gemäss den Ansprüchen 1 bis 15 mit einem Bandrücken (Br) und mit einer daran angeordneten Zahnreihe die mehrere Zähne (20) aufweist, wobei die Ursprungs Zahnform (10) dreieckförmig ist mit einer Zahnbasis mit der Zahnbreite (b) und mit der Zahnspitze (1) mit einer ersten Zahnhöhe (h1), derart dass die Zahnspitze (1) die Zahnbreite (b) in Bandlaufrichtung (L) nicht überragt, wobei der in der Laufrichtung (L) vorne liegende Schenkel des Dreiecks die Spanfläche (2) und der hintere Schenkel die Freifläche (3) des Zahnes (10, 20) bildet, **dadurch gekennzeichnet, dass** die Zahnspitze (1) des Dreiecks mit der ersten Zahnhöhe (h2) mit einem abrasiven Bürstverfahren zur Formgebung abgetragen wird bis ein abgerundeter Zahnkopf (4) in der gewünschten Form entsteht mit einer reduzierten zweiten Zahnhöhe (h2) beabstandet von der Basis des Dreiecks mit der Zahnbreite (b), und dass nach der mechanischen Bearbeitung mindestens ein Teil der Schneidfläche, am Zahnkopf (4), der Spanfläche (2) und der Freifläche (3), mit einer Hartstoffbeschichtung versehen wird.

17. Verfahren nach Anspruch 16, **dadurch gekennzeichnet, dass** das Bürst verfahren mit einem Bürstwerkzeug (7, 8) durchgeführt wird bei welchem die Bürste Kunststoffilamente enthalten mit darin eingebettetem abrasiven granulierten Werkstoffen.

18. Verfahren nach Anspruch 17, **dadurch gekennzeichnet, dass** der Kunststoff ein PEEK, PMIA oder Nylon ist. (Bitte noch die Abkürzungen angeben)

19. Verfahren nach einem der Ansprüche 17 oder 18, **dadurch gekennzeichnet, dass** die Kunststoffilamente Kohlefasern enthalten.

20. Verfahren nach einem der Ansprüche 17 bis 19, **dadurch gekennzeichnet, dass** das Kunststoffilament als abrasiven granulierten Werkstoff enthalten, vorzugsweise einen der Stoffe Korund, Karborundum, SiC und / oder vorzugsweise Diamant, oder Kombinationen davon.

21. Verfahren nach einem der Ansprüche 16 bis 20, **dadurch gekennzeichnet, dass** das Bürstverfahren mit rotierenden tellerförmigen und / oder walzenförmigen Bürstwerkzeugen (7, 8) durchgeführt wird.

22. Verfahren nach einem der Ansprüche 16 bis 21, **dadurch gekennzeichnet, dass** das Bürstverfahren mindestens in zwei Schritten nacheinander, vorzugsweise in mindestens drei Schritten, durchgeführt wird und dass die Filamentdicke der Bürstwerkzeuge (7, 8) bei jedem Schritt verringert wird.

23. Verfahren nach einem der Ansprüche 16 bis 22, **dadurch gekennzeichnet, dass** Bürstwerkzeuge planetenartig rotierend über die Zähne (10, 20) des Sägebandes geführt werden.

24. Verfahren nach einem der Ansprüche 16 bis 23, **dadurch gekennzeichnet, dass** mehrere Sägebänder in einem Paket zusammengefasst und gleichzeitig bearbeitet werden, vorzugsweise mit einer Paketgrösse im Bereich von 10 bis 100 Sägebänder.

## Claims

1. Saw band of steel for a band saw machine with a band back (Br) and with a row of teeth arranged thereon with several teeth (20), wherein the original tooth form (10) is triangular with a tooth base with tooth width (b) and with tooth tip (1) with a first tooth height (h1) such that the tooth tip (1) does not project beyond the tooth width (b) in the band running direction (L), wherein the front leg of the triangle in the running direction (L) forms the face (2) and the rear leg of the triangle forms the flank (3) of the tooth (10, 20), **characterised in that** the tooth tip (1) of the triangle is machined rounded and is formed as a rounded tooth head (4) with a reduced second tooth height (h2) and is spaced from the base of the triangle with tooth width (b), and that at least in the area of the tooth head (4) a hard substance coating at least partly covers the cutting surface formed by the tooth head (4), the face (2) and the flank (3).

2. Saw band according to claim 1, **characterised in that** the face (2) is angled to the perpendicular of the base and the band back (Br) by a face angle (γ) and this lies in the range from 0° to 7°, preferably in the range from 0° to 3°.

3. Saw band according to claim 1 or 2, **characterised in that** the flank (4) is angled to the perpendicular of the face (2) by a flank angle (α) and this lies in the range from 0° to 20°, preferably in the range from 4° to 10°.

4. Saw band according to any of the preceding claims, **characterised in that** the cutting height (X) of the tooth tip (1) of the original triangle to the tooth head (4), measured along the face (2) of the triangle, lies in the range from 0.02 to 0.30 mm, preferably in the range from 0.02 to 0.10 mm for an original tooth height (h1) of the tip (1) of the triangle of 1.00 to 10.00 mm and for a tooth width (b) at the triangle base of 1.0 to 10.0 mm.

5. Saw band according to any of the preceding claims, **characterised in that** at least part of the length of the original face (2) of the triangle, at least in a part section away from the tooth head (4) in the direction towards the base, is angled further by an additional effective face angle (γeff) and this angle lies in the range from 0° to 20°, preferably in the range from 4° to 10°.

6. Saw band according to claim 5, **characterised in that** the angled part section, measured along the face (2), forms the slant length (Y) and lies in the range from 0.00 to 0.30 mm, preferably in the range from 0.00 to 0.15 mm, and maximum up to the base of the tooth (20).

7. Saw band according to any of the preceding claims, **characterised in that** the rounded tooth head (4) in the top area with the tooth height (h2) has a first cutting edge radius (R1) which lies in the range from 0.02 to 0.30 mm, preferably in the range from 0.03 to 0.15 mm.

8. Saw band according to any of the preceding claims, **characterised in that** in the rear area of the tooth head (4) against the flank (3) of the triangle, a rounding is provided with a rear second radius (R2) which lies in the range from 0.02 to 0.30 mm, preferably in the range from 0.03 to 0.15 mm.

9. Saw band according to any of the preceding claims, **characterised in that** the coating comprises one or more metals of the IVth, Vth or VIth secondary element group of the periodic system or aluminium or silicium.

10. Saw band according to claim 9, **characterised in that** the coating comprises the nitrides, oxides, carbides, carbonitrides, borides of said metals or mixtures thereof.

11. Saw band according to claim 10, **characterised in that** the coating comprises TiAIN, AlCrN, metal or metal-free DLC, DiAlSiN, TiAlCN, WC/C.

12. Saw band according to claims 9 to 11, **characterised in that** the coating is formed as a multilayer system.

13. Saw band according to claim 12, **characterised in that** the multilayer system comprises adhesion and transition layers.

14. Saw band according to any of the preceding claims, **characterised in that** the coating has a thickness of less than 4 µm, preferably from 0.5 to 3 µm, particularly preferably from 0.7 to 2 µm.

15. Saw band according to any of the preceding claims, **characterised in that** the band back (Br) and the tooth row with the rounded teeth (20) comprise different types of steel and the tooth row comprises a high performance, high speed working steel, preferably HSSE.

16. Method for production of a saw band of steel for a band saw machine according to claims 1 to 15, with a band back (Br) and with a row of teeth arranged thereon with several teeth (20), wherein the original tooth form (10) is triangular with a tooth base with tooth width (b) and with tooth tip (1) with a first tooth height (h1) such that the tooth tip (1) does not project beyond the tooth width (b) in the band running direction (L), wherein the front leg of the triangle in the running direction (L) forms the face (2) and the rear leg forms the flank (3) of the tooth (10, 20), **characterised in that** the tooth tip (1) with the first tooth height (h2) is removed with an abrasive brushing process for shaping until a rounded tooth head (4) is produced in the desired shape with a reduced second tooth height (h2) spaced from the base of the triangle with tooth width (b), and that after the machining at least part of the cutting surface at the tooth head (4), the face (2) and the flank (3), is fitted with a hard substance coating.

17. Method according to claim 16, **characterised in that** the brushing process is performed with a brushing tool (7, 8) in which the brushes comprise plastic filaments with abrasive granular materials embedded therein.

18. Method according to claim 17, **characterised in that** the plastic is a PEEK, PMIA or nylon.

19. Method according to claim 17 or 18, **characterised in that** the plastic filaments comprise carbon fibres.

20. Method according to any of claims 17 to 19, **characterised in that** the plastic filament comprises, as abrasive granular material, preferably one of the substances corundum, carborundum, SiC and/or preferably diamond, or combinations thereof.

21. Method according to any of claims 16 to 20, **characterised in that** the brushing process is performed with rotating plate-like and/or roll-like brushing tools (7, 8).

22. Method according to any of claims 16 to 21, **characterised in that** the brushing process is performed at least in two successive stages, preferably in at least three stages, and that the filament thickness of the brushing tools (7, 8) is reduced in each stage.

23. Method according to any of claims 16 to 22, **characterised in that** brushing tools are guided rotating planet-like over the teeth (10, 20) of the saw band.

24. Method according to any of claims 16 to 23, **characterised in that** several saw bands are combined in a packet and machined simultaneously, preferably with a packet size in the range from 10 to 100 saw bands.

## Revendications

1. Ruban en acier pour scie à ruban, dans lequel ledit ruban comprend un dos de ruban (Br) et, agencé sur ce dernier, une rangée de plusieurs dents (20), la forme d'origine (10) de chaque dent étant triangulaire, la base de la dent ayant une largeur (b) et la pointe (1) de la dent ayant une première hauteur (h1) telle que cette dernière ne dépasse pas la largeur (b) de la dent dans le sens de déplacement (L) du ruban, ruban dans lequel le côté avant du triangle - dans le sens de déplacement (L) - constitue la face d'attaque (2) de la dent (10, 20) et le côté arrière la face de dépouille (3) de celle-ci, **caractérisé en ce que** la pointe (1) du triangle est enlevée en arrondi et configurée en tête de dent (4) arrondie présentant une deuxième hauteur de dent (h2) réduite, ladite tête étant espacée de la base du triangle dont la largeur est la largeur de dent (b), et **en ce qu'**un revêtement dur, appliqué au moins dans le secteur de la tête de dent (4), recouvre au moins en partie la surface de coupe formée par la tête de dent (4), la face d'attaque (2) et la face de dépouille (3).

2. Ruban de scie selon la revendication 1, **caractérisé en ce que** la face d'attaque (2) est inclinée selon un angle d'attaque (γ) par rapport à la verticale de la base et du dos de ruban (Br) et **en ce que** ledit angle d'attaque est compris entre 0° et 7°, de préférence entre 0° et 3°.

3. Ruban de scie selon la revendication 1 ou 2, **caractérisé en ce que** la face de dépouille (3) est inclinée selon un angle de dépouille (α) par rapport à la verticale de la face d'attaque (2) et **en ce que** ledit angle de dépouille est compris entre 0° et 20°, de préférence entre 4° et 10°.

4. Ruban de scie selon l'une quelconque des revendications précédentes, **caractérisé en ce que** la hauteur d'enlèvement (X) de la pointe (1) du triangle d'origine jusqu'à la tête de dent (4), mesurée le long de la face d'attaque (2) du triangle, est comprise entre 0,02 et 0,30 mm, de préférence entre 0,02 et 0,10 mm, dans le cas d'une hauteur de dent d'origine (h1) à la pointe (1) du triangle comprise entre 1,00 et 10,00 mm et d'une largeur de dent (b) à la base du triangle comprise entre 1,00 et 10,00 mm.

5. Ruban de scie selon l'une quelconque des revendications précédentes, **caractérisé en ce qu'**au moins une partie de la longueur de la face d'attaque (2) d'origine du triangle est inclinée davantage, au moins sur un tronçon partant de la tête de dent (4) en direction de la base, selon un angle d'attaque supplémentaire effectif (γeff) et **en ce que** ce dernier est compris entre 0° et 20°, de préférence entre 4° et 10°.

6. Ruban de scie selon la revendication 5, **caractérisé en ce que** le tronçon incliné, mesuré le long de la face d'attaque (2) et constituant la longueur oblique (Y), est compris entre 0,00 et 0,30 mm, de préférence entre 0,00 et 0,15 mm, et qu'il se prolonge au maximum jusqu'à la base de la dent (20).

7. Ruban de scie selon l'une quelconque des revendications précédentes, **caractérisé en ce que** la tête de dent (4) arrondie présente, dans le secteur d'extrémité supérieure de hauteur de dent (h2), un premier rayon d'arête (R1) compris entre 0,02 et 0,30 mm, de préférence entre 0,03 et 0,15 mm.

8. Ruban de scie selon l'une quelconque des revendications précédentes, **caractérisé en ce qu'**il est prévu, dans le secteur arrière de la tête de dent (4), en direction de la face de dépouille (3) du triangle, un arrondi présentant un second rayon (R2), rayon arrière compris entre 0,02 et 0,30 mm, de préférence entre 0,03 et 0,15 mm.

9. Ruban de scie selon l'une quelconque des revendications précédentes, **caractérisé en ce que** le revêtement comprend soit un ou plusieurs métaux des groupes d'éléments secondaires IV, V ou VI du tableau périodique, soit de l'aluminium ou du silicium.

10. Ruban de scie selon la revendication 9, **caractérisé en ce que** le revêtement comporte les nitrures, oxydes, carbures, carbonitrures, borures des métaux mentionnés plus haut ou des mélanges desdits nitrures, oxydes, carbures, carbonitrures ou borures.

11. Ruban de scie selon la revendication 10, **caractérisé en ce que** le revêtement comporte du TiAlN, de l'AlCrN, du DLC métallique ou non métallique, du TiAlSiN, TiAlCN ou du WC/C.

12. Ruban de scie selon les revendications 9 à 11, **caractérisé en ce que** le revêtement est réalisé en système multicouche.

13. Ruban de scie selon la revendication 12, **caractérisé en ce que** le système multicouche comprend des couches d'adhésion et des couches de transition.

14. Ruban de scie selon l'une quelconque des revendications précédentes, **caractérisé en ce que** le revêtement présente une épaisseur inférieure à 4 µm, de préférence comprise entre 0,5 et 3 µm et, de préférence particulière, comprise entre 0,7 et 2 µm.

15. Ruban de scie selon l'une quelconque des revendications précédentes, **caractérisé en ce que** le dos de ruban (Br) et la rangée de dents arrondies (20) sont fabriqués à partir de différentes sortes d'acier et **en ce que** la rangée de dents est fabriquée à partir d'un acier rapide haute performance, de préférence du HSSE.

16. Procédé de fabrication d'un ruban en acier pour scie à ruban selon les revendications 1 à 15 dans lequel ledit ruban comprend un dos de ruban (Br) et, agencé sur ce dernier, une rangée de plusieurs dents (20), la forme d'origine (10) de chaque dent étant triangulaire, la base de la dent ayant une largeur (b) et la pointe (1) de la dent ayant une première hauteur (h1) telle que cette dernière ne dépasse pas la largeur (b) de la dent dans le sens de déplacement (L) du ruban, ruban dans lequel le côté avant du triangle - dans le sens de déplacement (L) - constitue la face d'attaque (2) de la dent (10, 20) et le côté arrière la face de dépouille (3) de celle-ci, **caractérisé en ce que** la pointe de dent (1) du triangle de première hauteur (h1) est enlevée à l'aide d'un brossage abrasif de formage jusqu'à l'obtention d'une tête de dent (4) arrondie présentant la forme souhaitée et ayant une seconde hauteur de dent (h2) réduite, ladite tête étant espacée de la base du triangle dont la largeur coincide avec la largeur de dent (b), et **en ce que**, après l'opération d'usinage, au moins une partie de la surface de coupe, au niveau de la tête de dent (4), de la face d'attaque (2) et de la face de dépouille (3), est dotée d'un revêtement dur.

17. Procédé selon la revendication 16, **caractérisé en ce que** le brossage est effectué à l'aide d'un outil de brossage (7, 8) dans lequel la brosse comporte des filaments de matière synthétique dans lesquels sont noyés des matériaux abrasifs granulés.

18. Procédé selon la revendication 17, **caractérisé en ce que** la matière synthétique est un PEEK, PMIA ou un nylon.

19. Procédé selon la revendication 17 ou 18, **caractérisé en ce que** les filaments de matière synthétique comportent des fibres de carbone.

20. Procédé selon l'une quelconque des revendications 17 à 19, **caractérisé en ce que** les filaments de matière synthétique comportent comme matériau abrasif granulé, de préférence, soit du corindon, du carborundum, du SiC et/ou, de préférence, du diamant, soit des combinaisons dedits matériaux.

21. Procédé selon l'une quelconque des revendications 16 à 20, **caractérisé en ce que** le brossage est effectué à l'aide d'outils de brossage (7, 8) rotatifs en forme de disque et /ou de rouleau.

22. Procédé selon l'une quelconque des revendications 16 à 21, **caractérisé en ce que** le brossage est effectué au moins en deux étapes successives, de préférence en trois étapes, et **en ce que** l'épaisseur des filaments des outils de brossage (7, 8) est réduite à chaque étape.

23. Procédé selon l'une quelconque des revendications 16 à 22, **caractérisé en ce que** des outils de brossage sont conduits sur les dents (10, 20) du ruban de scie avec des mouvements de rotation planétaire.

24. Procédé selon l'une quelconque des revendications 16 à 23, **caractérisé en ce que** plusieurs rubans de scie sont réunis en paquet et usinés en même temps, chaque paquet regroupant, de préférence, entre 10 et 100 rubans.
